# EUROPEAN PATENT APPLICATION

(11) **EP 4 198 084 A1**
(43) Date of publication of application: **21.06.2023**
(21) Application number: 21855955.7
(22) Date of filing: 10.08.2021
(51) Int. Cl.: C08L 29/04, B32B 27/30, C08K 5/053

(54) **POLYVINYL ALCOHOL RESIN COMPOSITION AND MELT-MOLDED BODY USING SAID RESIN COMPOSITION**

(30) Priority: 11.08.2020 JP 2020135590
(71) Applicant: Mitsubishi Chemical Corporation, Chiyoda-ku Tokyo 100-8251 (JP)
(72) Inventor: IKUBO Satoshi, Tokyo 100-8251 (JP); TANIGUCHI Masahiko, Tokyo 100-8251 (JP)
(74) Representative: Vossius & Partner Patentanwälte Rechtsanwälte mbB
(86) International application number: PCT/JP2021/029493
(87) International publication number: WO 2022/034876

(57) **Abstract**

Provided is a resin composition containing a melt-moldable polyvinyl alcohol-based resin which is improved in gas barrier property, and a melt-molded article of the resin composition. The resin composition comprises a polyhydric alcohol having 5 to 15 carbon atoms in addition to a melt-moldable polyvinyl alcohol-based resin which has a primary hydroxyl group in the side chain. The polyhydric alcohol is preferably at least one selected from the group consisting of dipentaerythritol and pentaerythritol.

## Description

### TECHNICAL FIELD

The present invention relates to a polyvinyl alcohol-based resin composition capable of providing a melt-molded article having excellent gas-barrier properties, and a melt-molded article of the resin composition.

### BACKGROUND

A gas-barrier property is required to a general container or packaging film such as agricultural, civil engineering, industrial, medical packaging, and a container of package for leisure, toys, miscellaneous goods, daily necessities, and parts from the viewpoint of preserving contents therein from deterioration of their quality.

Polyvinyl alcohol (PVA) has high crystallinity due to hydrogen bonding between hydroxyl groups thereof, and has excellent gas-barrier properties based on such high crystallinity. For this reason, a PVA-based resin or a resin composition thereof is used as a gas-barrier layer of the container or packaging film.

A molded article such as container and film is typically manufactured by melt molding because of high productivity.

On the other hand, it is commonly difficult to produce a melt-molded article of polyvinyl alcohol (PVA) by hot melt molding because its melting point is close to its decomposition temperature. However, a PVA-based resin having a side chain 1,2-diol structure which is a melt-moldable modified PVA-based resin has been proposed, for example, in JP 2002-284818 A, JP 2004-285143 A, and JP 2006-095825 A.

In addition, since a molded article of PVA resin is rigid, a plasticizer is added to PVA resin compositions for melt molding such as packaging film or container, which is proposed in, for example, JP 2001-288321 A.

### PRIOR ART

### PATENT DOCUMENT

[Patent Document 1] JP 2002-284818 A
[Patent Document 2] JP 2004-285143 A
[Patent Document 3] JP 2006-095825 A
[Patent Document 4] JP 2001-288321 A

### SUMMARY OF THE INVENTION

### TECHNICAL PROBLEM TO BE SOLVED BY THE INVENTION

The excellent gas-barrier property of a PVA-based resin is based on the high crystallinity of the PVA molecular chains. However, the addition of a plasticizer or a modified PVA-based resin containing a copolymerized monomer may decrease a gas-barrier property because they may disturb the crystallinity. Further, when the PVA-based resin is subject to a continuous melt-molding for a long period of time, the product may be thermally degraded, and there is a room for improvement in terms of thermal stability.

The present invention has been made under the circumstances, and an object thereof is to provide a PVA-based resin composition capable of being melt-molded to provide a melt molded article with an excellent gas-barrier property.

### MEANS FOR SOLVING THE PROBLEM

The present inventors focused on a PVA-based resin containing a primary hydroxyl group in a side chain known as a modified PVA-based resin capable of being melt-molded. The present inventors have found that the addition of a polyhydric alcohol having 5 to 15 carbon atoms to the modified PVA-based resin can not only suppress the decrease in gas-barrier property but moreover increase in the gas-barrier property, and completed the present invention.

According to the invention, the polyvinyl alcohol-based resin composition comprises a polyvinyl alcohol-based resin having a primary hydroxyl group in side chain thereof and a polyhydric alcohol having 5 to 15 carbon atoms. The polyhydric alcohol is preferably at least one selected from the group consisting of dipentaerythritol and pentaerythritol.

The total content of the dipentaerythritol and the pentaerythritol is preferably 0.1 parts by weight or more but less than 50 parts by weight per 100 parts by weight of the polyvinyl alcohol-based resin.

The polyvinyl alcohol-based resin is preferably a polyvinyl alcohol-based resin having a structural unit represented by the following formula (3).

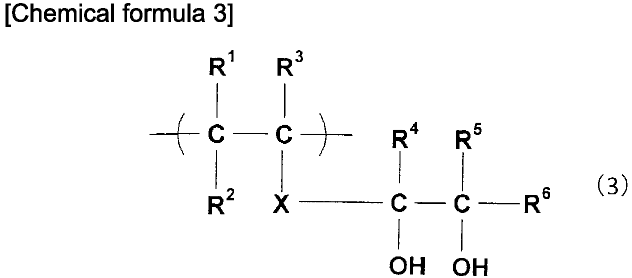

In the formula, R¹ through R⁶ are a hydrogen atom or an alkyl group having 1 to 4 carbon atoms with an optional substitutent, and X is a linking group.

The resin composition of the present invention is preferably in the form of pellets.

According to another aspect, the present invention includes a melt-molded article of the resin composition of the invention, and a multilayer structure containing a layer made of the resin composition.

### EFFECT OF THE INVENTION

The polyvinyl alcohol-based resin composition of the present invention has improved in orientability and gas-barrier property as compared to a main component alone. The main component of the resin composition is a PVA-based resin having a primary hydroxyl group in a side chain.

### EMBODIMENT FOR CARRYING OUT THE INVENTION

### [Polyvinyl alcohol-based resin composition]

The polyvinyl alcohol-based resin composition of the present invention is a composition comprising a polyvinyl alcohol-based resin having a primary hydroxyl group in its side chain (sometimes referred to as "side chain primary hydroxyl group-containing PVA-based resin") and a polyhydric alcohol having 5 to 15 carbon atoms.

### <Side chain primary hydroxyl group-containing PVA-based resin>

The side chain primary hydroxyl group-containing PVA-based resin is a modified PVA-based resin which comprises the following constituting units: a vinyl alcohol unit represented by the formula (1), a vinyl ester unit represented by the formula (2) as an unsaponified portion, and a structural unit having a primary hydroxyl group in the side chain.

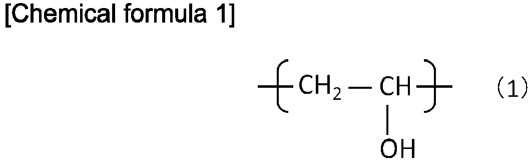

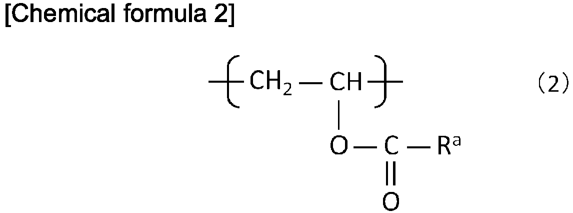

A preferable structural unit having a primary hydroxyl group in the side chain is a side chain 1 ,2-diol-containing unit represented by the following formula (3).

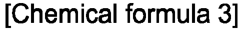

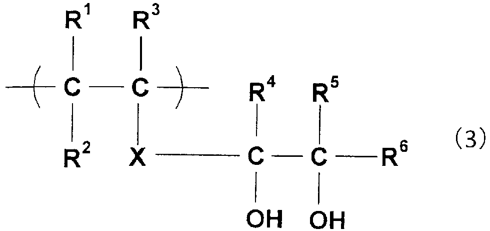

Examples of the vinyl ester monomer for the vinyl ester unit include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, vinyl versatate and the like. Of these, vinyl acetate is preferably used for an economical reason.

The vinyl ester unit is included, when the saponification degree is less than 100%. In the formula (2), R^{a} depends on a type of vinyl ester monomer used. When a vinyl acetate monomer is used, R^{a} is methyl group.

In the general formula (3), each of R¹ through R⁶ is a hydrogen atom or an alkyl group having 1 to 4 carbon atoms such as methyl, ethyl, n-propyl, isopropyl, n-butyl, isobutyl, and tert-butyl. The alkyl group may have a substituent such as halogen group, hydroxyl group, ester group, carboxylic acid group or sulfonic acid group. A hydrogen atom is more preferred.

All of R¹ through R⁶ may be identical or different from each other, but preferably all of them are hydrogen atoms. When all of them are hydrogen atoms, the terminal of the side chain is a primary hydroxyl group, which may enhance a reactivity with adhesive resin such as an acid-modified polyolefin resin. This is preferable in terms of facilitating the formation of a laminate.

In the formula, the linking group (X) may be a single bond or a hydrocarbon group such as alkylene, alkenylene, alkynylene, phenylene or naphthylene, wherein the hydrocarbon group may contain a halogen substituent such as a fluorine, chlorine or bromine atom. Alternatively, the linking group (X) may be - O-, -(CH₂O)ₘ-, -(OCH₂)ₘ-, -(CH₂O)ₘCH₂-, -CO-, -COCO-, -CO(CH₂)ₘCO-, - CO(C₆H₄)CO-, -S-, -CS-, -SO-, -SO₂-, -NR-, -CONR-, -NRCO-, -CSNR-, -NRCS-, -NRNR-, -HPO₄-, -Si(OR)₂-, -OSi(OR)₂-, -OSi(OR)₂O-, -Ti(OR)₂-, -OTi(OR)₂-, - OTi(OR)₂O-, -AI(OR)-, -OAI(OR)-, -OAI(OR)O-, or the like, wherein R is an substituent independently, a preferable R is hydrogen atom or an alkyl group, and m is an integer of 1 to 5.

X is preferably a single bond or an alkylene group having 6 or less carbon atoms (in particular, methylene group) or -CH₂OCH₂- in terms of stability during the production or use. Among them, the single bond is most preferable in terms of thermal stability and stability under a high temperature and in an acidic condition.

Therefore, the most preferable structural unit represented by the formula (3) is the side chain 1 ,2-diol-containing unit represented by the following formula (3a).

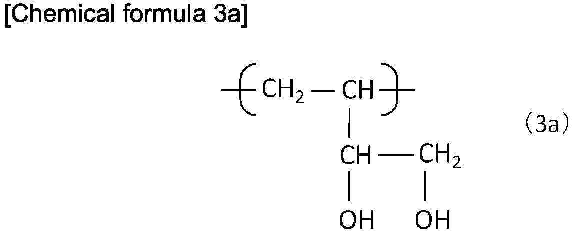

The PVA-based resin having a primary hydroxyl group in the side chain (in particular, the side chain 1,2-diol-containing PVA-based resin) usually has a modification rate (content of a primary hydroxyl group in the side chain) of 0.1 to 20 mol%, preferably 0.5 to 15 mol%, more preferably 1 to 10 mol%, and particularly preferably 2 to 8 mol%. If the modification rate is too low, the reactivity with an adhesive resin such as acid-modified polyolefin resin tends to be decreased. If the modification rate is too high, a crystallization speed is too slow, and when forming a laminate with another resin, the obtained laminate might have a deteriorated appearance such as a deformed laminate.

The number average polymerization degree of the side chain primary hydroxyl group-containing PVA-based resin (preferably side chain 1,2-diol-containing PVA-based resin) having the above configuration is usually from 150 to 4000, preferably 200 to 2000, more preferably 250 to 800, and more preferably 300 to 600. The average polymerization degree is measured in accordance with JIS K6726. If the average polymerization degree is unduly low, the formation of a stable shape by melt molding tends to be difficult. If the average polymerization degree is unduly high, the viscosity of the resin composition is significantly increased, as a result, molding may be difficult.

As an index of the average polymerization degree of the PVA-based resin, the viscosity of the aqueous solution may be used. The viscosity of a 4% by weight aqueous solution at 20 °C measured in accordance with JIS K6726 is usually from 1.5 to 20 mPa · s, preferably 2 to 12 mPa · s, and particularly preferably 2.5 to 8 mPa·s. If the viscosity is unduly low, keeping a stable shape during melt molding may be difficult, but unduly high viscosity may result in difficult molding. In addition, unduly high viscosity may decrease workability for coating with an aqueous solution thereof.

The saponification degree of the PVA-based resin (preferably side chain 1,2-diol-containing PVA-based resin) is usually from 70 to 99.9 mol%, preferably from 75 to 99.7 mol%, and particularly preferably from 78 to 99.5 mol %. Unduly low saponification degree may provide a relatively flexible product, which lowers a shape stability during lamination using the product. The saponification degree is measured in accordance with JIS K6726.

The side chain primary hydroxyl group-containing PVA-based resin having an above-mentioned structure of repeating units may be produced, for example, by the production methods disclosed in JP 2002-284818 A, JP 2004-285143 A, and so on.

The side chain primary hydroxyl group-containing PVA resin used in the present invention may contain the following repeating units derived from copolymerized monomers within a range that does not impair the melt moldability of the side chain primary hydroxyl group-containing PVA resin, specifically, 12 mol % or less, preferably 10 mol % or less.

Examples of the copolymerizable monomers include olefins such as ethylene, propylene, isobutylene, α-octene, α-dodecene, and α-octadecene; unsaturated acids such as acrylic acid, methacrylic acid, crotonic acid, maleic acid, maleic anhydride, and itaconic acid, salts thereof, or monoalkyl or dialkyl esters thereof; nitriles such as acrylonitrile and methacrylonitrile; amides such as acrylamide and methacrylamide; olefin sulfonic acids such as ethylenesulfonic acid, allylsulfonic acid, and methallylsulfonic acid, or salts thereof; alkyl vinyl ethers; N-acrylamidomethyl trimethylammonium chloride, allyltrimethylammonium chloride, dimethylallyl vinyl ketone, N-vinylpyrrolidone, vinyl chloride, and vinylidene chloride; polyoxyalkylene (meth)allyl ethers such as polyoxyethylene (meth)allyl ether and polyoxypropylene (meth)allyl ether; polyoxyalkylene (meth)acrylates such as polyoxyethylene (meth)acrylate and polyoxypropylene (meth)acrylate; polyoxyalkylene (meth)acrylamides such as polyoxyethylene (meth)acrylamide and polyoxypropylene (meth)acrylamide; polyoxyethylene (1-(meth)acrylamide-1,1-dimethylpropyl) ester, polyoxyethylene vinyl ether, and polyoxypropylene vinyl ether; polyoxyethylene allylamine, polyoxypropylene allylamine, polyoxyethylene vinylamine, polyoxypropylene vinylamine; hydroxy group-containing α-olefins such as 3-butene-1-ol, 4-penten-1-ol and 5-hexene-1-ol; and derivatives such as an acylated product thereof.

One type or a mixture of two or more types of the side chain primary hydroxyl group-containing PVA-based resin may be used in the resin composition of the present invention. As for the mixture of two or more types, PVA-based resins having different saponification degrees, polymerization degrees, or modification rate from each other, or PVA-based resins having different types of side chain primary hydroxyl group-containing units from each other may be used in combination.

### <Gas-barrier property-improving type plasticizer>

The resin composition of the present invention is characterized in that a polyhydric alcohol having 5 to 15 carbon atoms is used as a plasticizer for improving gas-barrier property.

Examples of the polyhydric alcohols having 5 to 15 carbon atoms include pentaerythritol (C₅H₁₂O₄, melting point of 238 to 260°C), dipentaerythritol (C₁₀H₂₂O₇, melting point of 210 to 218°C) and mannitol (C₆H₁₄O₆, melting point of 166 to 168°C). Of these, pentaerythritol, dipentaerythritol, and a combination thereof are preferred. They are polyhydric alcohols having a melting point higher than that of the polyvinyl alcohol-based resin which is the main component of the resin composition.

The polyhydric alcohol having 5 to 15 carbon atoms can act as a plasticizer for the PVA-based resin, contribute to lowering the melting point of the composition, and improve fluidity during melting.

A general plasticizer such as glycerin and polyethylene glycol, which is liquid at room temperature, is commonly used as a plasticizer for a polyvinyl alcohol resin. Such a liquid plasticizer can reduce a flow viscosity of the polyvinyl alcohol-based resin and improve workability during kneading and orienting. However, the liquid plasticizer tends to lower the gas-barrier properties as compared with the PVA-based resin alone, and a gas-barrier film containing the liquid plasticizer cannot exhibit an expected gas barrier property inherent in the PVA-based resin.

On the other hand, when a polyhydric alcohol having 5 to 15 carbon atoms is used, gas-barrier properties can be improved as compared with the case of using a PVA-based resin alone. The polyhydric alcohol seems to act as a gas-barrier property-improving type plasticizer. Although the mechanism is not clarified, it is considered that a polyhydric alcohol sizing as a molecule can enter an amorphous portion of the PVA-based resin and enhance a cohesion through hydrogen bonding of hydroxyl groups between the vinyl alcohol unit in the PVA chain and the dipentaerythritol. In this respect, since glycerin and polyethylene glycol are liquid at room temperature, the cohesive force by hydroxyl groups cannot be obtained. The liquid plasticizer can give plasticization to PVA-based resin, however, they may not improve gas-barrier property of the PVA-based resin.

Furthermore, a polyhydric alcohol having 5 to 15 carbon atoms such as pentaerythritol and dipentaerythritol (hereinafter, the polyhydric alcohol may be referred to as "gas-barrier property-improving type plasticizer"), can improve the orientability of a film-like molded article. When orienting a film formed from a resin composition of the invention containing a polyhydric alcohol having 5 to 15 carbon atoms such as pentaerythritol and dipentaerythritol, a higher orient ratio can be applied than a film formed from a resin composition that does not contain a polyhydric alcohol. This means that the increase in orientability of the PVA resin chain may be allowed, thereby increasing the film strength, as well as improving the gas-barrier property. Although the mechanism is not clarified, it is considered that a polyhydric alcohol having 5 to 15 carbon atoms, such as pentaerythritol and dipentaerythritol, may exist in the form of solid at an orienting temperature, and act as an effective plasticizer during the orienting process.

The gas-barrier property-improving type plasticizer may be contained in an amount of 0.1 parts by weight or more, preferably 1 part by weight or more, 5 parts by weight or more, 10 parts by weight or more, 11 parts by weight or more, 12 parts by weight or more, and 15 parts by weight or more, but less than 50 parts by weight, per 100 parts by weight of the polyvinyl alcohol resin. Moreover, the upper limit of the content is preferably 38 parts by weight or less, 35 parts by weight or less, 30 parts by weight or less, and 28 parts by weight or less. A preferable content within this range is selected according to the applicable melt-molding method and the type of polyhydric alcohol used.

If the content of the gas-barrier property-improving type plasticizer is too small, the effect of improving the gas-barrier property cannot be obtained. If the content is too large, melt molding becomes difficult. Unduly large content of the plasticizer relatively decreases the content of the polyvinyl alcohol-based resin in the composition, which may result in deterioration of the gas-barrier property of the resin composition.

Such a pentaerythritol can be synthesized by condensing acetaldehyde and formaldehyde in a basic condition. However, a commercially available product (for example, "Penta mono" manufactured by Perstorp etc.) may also be used.

The dipentaerythritol may usually be produced by (i) a method of obtaining as a by-product of pentaerythritol synthesized by aldol condensation between aldehyde and formaldehyde, (ii) a method of synthesizing polypentaerythritol mixture from pentaerythritol using phosphoric acid, sulfuric acid, etc., (iii) a method of reacting ureas with pentaerythritol, and the like. In either synthetic method, dipentaerythritol is obtained as a mixture with an other compound. For this reason, in order to increase the content of dipentaerythritol, it is preferable to add a metal hydroxide or an alkaline earth metal hydroxide to the liquid in which pentaerythritol and an aldehyde have been reacted. As the dipentaerythritol, a commercial product may be used, and examples of the commercial product include "Di-Penta90" manufactured by Perstorp.

Dipentaerythritol usually contains about 5% by weight of pentaerythritol as a by-product. For this reason, in the case of adjusting the content of pentaerythritol precisely, using a purified or highly pure dipentaerythritol is recommended.

A polyhydric alcohol such as pentaerythritol and dipentaerythritol, which is a gas-barrier property-improving type plasticizer, may be used alone. However, a combination of pentaerythritol and dipentaerythritol is preferable. Dipentaerythritol usually contains pentaerythritol as an impurity. Therefore, the use of dipentaerythritol may result in a mixture of pentaerythritol and dipentaerythritol. On the other hand, pentaerythritol can be used as a single compound.

When dipentaerythritol (DPE) and pentaerythritol (PE) are used in combination, the content ratio (DPE/PE) of both compounds is preferably appropriately selected according to the type of melt molding method.

For example, in the case of film molding, the mixing ratio (DPE/PE) is preferably 10 or more, particularly preferably 30 or more, and 100 or less, and further preferably 70 or less in a T-die method. When pentaerythritol is contained as a by-product as an impurity of dipentaerythritol, its content is no more than 1/10 based on the content of dipentaerythritol, in other words, DPE/PE is 10 or less. In this case, the amount of dipentaerythritol is predominantly contained in the mixture.

In a tubular film method (blown molding), the mixing ratio (DPE/PE) of both compounds is from 0.1 to 10, preferably 0.3 to 5, more preferably 0.5 to 2. This is a case that pentaerythritol and dipentaerythritol are preferably contained in nearly equal amounts.

A preferable mixing ratio of both compounds depends on a type of molding method, but the reason is not clear. The T-die method uses a cooling roll to cool the melt-extruded film, whereas the tubular film method uses air cooling. Such a difference in the cooling method may be a potential reason.

### <Other additive>

### (1) Other plasticizers

The polyhydric alcohol contained in the resin composition of the invention can act as a plasticizer. However, another plasticizer may be contained as long as the effect of the invention is not impaired, for example, in an amount of less than 3% by weight of the total amount of plasticizer.

### (2) Other resins

The resin composition of the invention may contain a polymer within a range not impairing the effect of the composition such as melt moldability and gas-barrier properties, for example, less than 30% by weight of the composition. Examples of the other polymer include various thermoplastic resins such as polyamide, polyester, polyethylene, polypropylene, and polystyrene.

### (3) Other additives

In addition, if necessary, a reinforcing agent, filler, pigment, dye, lubricant, antioxidant, antistatic agent, ultraviolet absorber, heat stabilizer, light stabilizer, surfactant, antibacterial agent, antistatic agent, drying agent, antiblocking agent, flame retardant, cross-linking agent, curing agent, foaming agent, crystal nucleating agent, and so on may be contained within a range (10% by weight or less of the composition) as long as the effects of the invention are not impaired.

In the resin composition of the invention as described above, the presence of a polyhydric alcohol having 5 to 15 carbon atoms can suppress deterioration of the gas-barrier property caused from the modification of a PVA-based resin. Therefore, the gas-barrier property of the resin composition may be improved more than the PVA-based resin containing the side chain primary hydroxyl group alone. Furthermore, surprisingly, orientability of the resin composition is also improved when a polyhydric alcohol having 5 to 15 carbon atoms is used as a plasticizer. The film molded article made of the resin composition of the invention may be oriented at a ratio higher than that made of a resin composition containing no plasticizer or a conventional liquid plasticizer such as glycerin. Furthermore, the thermal stability of the resin composition is also improved, and moreover, an improved long-run moldability in melt molding may be obtained.

### [Manufacturing method of resin composition]

The resin composition of the invention may be obtained by (i) a method of dry-blending a PVA-based resin with a gas-barrier property-improving type plasticizer and other components, followed by melt-kneading; (ii) a method of mixing an aqueous solution of a PVA-based resin, a gas-barrier property-improving type plasticizer, and other components; and the like. The method (i) is preferable, and a pellet-shaped resin composition may be obtained.

When two or more polyhydric alcohols are used in combination, such as a mixture of pentaerythritol and dipentaerythritol, either polyhydric alcohol may be added first. For example, a mixture obtained by mixing dipentaerythritol and pentaerythritol in advance (or dipentaerythritol containing pentaerythritol as a by-product) may be added to the PVA-based resin.

### [Melt-molded article of resin composition and method for manufacturing the same]

The side chain primary hydroxyl group-containing PVA-based resin as a main component in a resin composition of the invention as well as the resin composition are melt moldable. A melt extrusion molding method which is a common melt molding method of a thermoplastic resin may be adopted based on a difference between the melting point and the thermal decomposition temperature of the side chain primary hydroxyl group-containing PV-based resin,

Therefore, the resin composition of the invention may be applied for a melt-molded article that requires a gas-barrier property, in particular, a bag made of melt-molded film, an oriented film or sheet, and a container such as cup, tray, tube, and bottle, and their lids, and so on.

The film and container may be made of a single layer of the resin composition of the invention. A multilayer structure in which two or more layers of other thermoplastic resins, papers, etc. are laminated on the inventive resin composition layer may also be used. In the multilayer structure, the layer of the resin composition of the invention has a role as a gas-barrier layer.

A multilayer structure containing the inventive resin composition layer as a gas-barrier layer may be used for, food packaging material such as coffee capsule and shrink film, drug packaging material, cosmetic packaging material such as lotion and foundation case, metal part packaging material, electronic part packaging material, packaging material for an article requiring the suppression of the deterioration caused from oxidation or moisture absorption, packaging materials for a substance that are concerned about odor transfer or odor leakage, various agricultural sheets such as mulch sheet, fumigation sheet, seedling tray, and covering sheet, and multilayered structure used for agricultural material.

Applicable melt molding methods include injection molding, extrusion molding, and the like. Extrusion molding is particularly suitable as a molding method for films and sheets. Examples of extrusion molding include a T-die molding method and a tubular film method (blown method). Not only single-layer extrusion but also multilayer extrusion may be used. The multilayer extrusion (co-extrusion) is suitable for the production of a multilayer structure made of laminated films.

The resulting film or sheet may be subjected to a secondary processing such as uniaxially or biaxially orientation. Since the resin composition of the present invention is excellent in orientability, it is preferable to perform an orienting treatment in order to increase film strength and further improve gas-barrier properties.

### EXAMPLES

Hereinafter, the present invention will be described with reference to examples and comparative examples, but the present invention is not limited to the following examples.

### [Method for measurement and evaluation]

### 1. Oxygen permeability (cc/m²·day·atm)

Using the MOCON oxygen transmission rate analyzer OX-TRAN2-21 (manufactured by Hitachi High-Tech Science Co., Ltd.), the oxygen permeation amount (per 20 µm) of the produced monolayer film was measured under the conditions of 65% RH and 23°C.

### 2. Thermal stability (long-run property)

Using the pellets of the resin composition containing the side chain 1,2-diol-modified PVA, a monolayer film was continuously produced for hours by the above-mentioned heat melting method, and the state of the produced film was visually observed. A long-run property was adopted as an index of thermal stability. The long-run property was evaluated based on a period of time (minutes) until streaks and gels were appeared at the edge of the film.

### 3. Orientability

Using PVA, adhesive resin ("P674V" manufactured by Mitsubishi Chemical Corporation) and polypropylene, a five-layer film of PP/adhesive layer/PVA/adhesive layer/PP=40/10/30/10/40 (having a thickness (µm) respectively) was prepared by T-die method or tubular film method. The total thickness of the film was 130 µm. The five-layer film was cut to obtain a test piece of 90 mm x 90 mm. The test piece was oriented in the machine direction and the transverse direction by an orienting machine ("Laboratory Stretcher KAR04" manufactured by Bruckner) at an orienting temperature of 150°C, for a preheating time of 40 seconds, and at an orienting speed of 200 mm/second. The orientation of the film was conducted with respect to the following two conditions and thereafter the film was investigated about which condition the orientation could be conducted without breaking the film.
Orienting condition A: 6.5 times x 6.5 times
Orienting condition B: 5 times x 5 times

### [Components of resin composition]

### 1. PVA-based resin

A side chain 1,2-diol-containing PVA-based resin having a structural unit represented by formula (3a) was used as the side chain primary hydroxyl group-containing PVA resin. The side chain 1,2-diol-containing PVA-based resin used has a modification degree (proportion of side chain 1,2-diol units) of 6 mol%, a saponification degree of 99 mol% as measured according to JIS K6726, and a polymerization degree of 450 as measured according to JIS K6726.

### 2. Plasticizer

(1) Dipentaerythritol
   "Di-Penta 90" (purity of 90 to 100%) manufactured by Perstorp was used.
(2) Pentaerythritol
   "Penta mono" (purity of 95 to100%) manufactured by Perstorp was used.
(3) Glycerin
   Glycerin available from Fujifilm Wako Pure Chemical Industries, Ltd. was used.

### [Preparation and Evaluation of Resin Composition]

### Resin composition Nos. 1 to 8 (formation of film by T-die method and evaluation)

A side chain 1,2-diol-modified PVA-based resin and a plasticizer are blended in the proportions shown in Table 1, and melt-kneaded using a twinscrew extruder TEX30α (manufactured by The Japan Steel Works, Ltd.) under the following conditions to prepare a respective resin composition pellet.
Diameter (D):15mm
L/D=60
Screw rotation speed: 200 rpm
Set temperature: C1/C2/C3/C4/C5/C6/C7/C8/D = 120/150/180/195/200/200/210/210/210°C
Screw pattern: 3 kneading screws
Screen mesh: 90/90 mesh
Discharge rate: 1.5 kg/hour

Pellets of the prepared resin composition were extruded with a single-screw extruder GT-40 (Plastic Engineering Laboratory Co., Ltd.) and a T-die under the following conditions to prepare a monolayer film having a thickness of 20 µm. The oxygen permeation amount (cc/m²·day·atm) per 20 µm thickness of the obtained film was measured. Further, the orientability of Nos. 1, 2, 6 and 8 and the long-run property of Nos. 2 and 4 were measured in accordance with the above measuring method.
Diameter (D): 15mm,
L/D=60
Screw rotation speed: 200 rpm
Set temperature: C1/C2/C3/C4/C5/C6/C7/C8/D = 150/180/190/195/200/210/210/210/210°C
Discharge rate: 1.5 kg/hour
Screen mesh: 90/90 mesh
Die: width of 300 mm, coat hanger type
Take-up speed: 2.6m/min
Temperature of Roll: 50°C
Air gap: 1 cm

**[Table 1]**

| composition No | amount (part) of plasticizer per 100 parts of PVA | | | | | evaluation of molded article | | molding property |
|---|---|---|---|---|---|---|---|---|
| | DPE | PE | others | total amount | blend ratio DPE/PE | oxygen permeation amount cc/m² day · atm | orientability | long-run property (min) |
| 1 | - | - | - | - | - | 0.56 | B | - |
| 2 | 25 | 0.38 | - | 25.38 | 66 | 0.35 | A | 270 |
| 3 | 23 | 2.5 | - | 25.5 | 9 | 0.38 | - | - |
| 4 | 11 | 0.22 | - | 11.22 | 49 | 0.38 | - | 150 |
| 5 | 10 | 1.1 | - | 11.1 | 9 | 0.54 | - | - |
| 6 | 5.2 | 0.1 | - | 5.3 | 49 | 0.49 | A | - |
| 7 | 9.4 | 1.7 | - | 11.1 | 5.7 | 0.55 | - | - |
| 8 | - | - | 22 (glycerin) | 22.0 | - | 6.7 | B | **-** |

Compositions Nos. 2 to 7, which were compositions containing dipentaerythritol and pentaerythritol, had lower oxygen permeation amount than the side chain 1,2-diol PVA-based resin alone. That is, gas-barrier property of them were improved. This was contrary to No.8, which was a composition containing glycerin as a plasticizer. No.8 exhibited a significant increase in oxygen permeation amount.

It was seen that the effect of improving the gas-barrier property tended to increase as the total amount of dipentaerythritol and pentaerythritol was increased. Furthermore, even if the total amount was almost equal, there was a tendency that the greater the DPE/PE blending ratio, the greater the effect of improving the gas-barrier property by a comparison between No. 2 and No. 3, and a comparison between Nos. 4, 5 and 7. From the comparison between No. 2 and No. 4, it was understood that a plasticizer having a larger total amount gave a superior long-run property.

As for orientability, Nos. 2 and 6, which were compositions containing dipentaerythritol and pentaerythritol, were superior to No. 1 which was only the side chain 1,2-diol PVA-based resin and No.8 which was a composition containing glycerin as a plasticizer.

### Resin composition Nos. 11 to 18 (formation of film by tubular film method and evaluation)

Pellets were produced in the same manner as No. 1 using the respective resin compositions shown in Table 2, and films were formed under the following conditions using a tubular film forming machine (manufactured by Placo). The obtained monolayer film (thickness: 20 µm) was measured for oxygen permeation amount (cc/m²·day·atm) per 20 µm thickness in accordance with the evaluation method described above. In addition, the orientability of Nos. 11, 12, 14 and 15 was also evaluated in accordance with the measurement method described above.
Cooling: Air cooling
L/D: 26
Screw: full flight
Compression ratio: 3.0
Mesh: 90/120/90
Diameter of die: 75mmφ
Gap: 1mm
Blow ratio: 1.2
Film folding width: 130mm
Temperature setting: 210°C at cylinder and 210°C at die

**[Table 2]**

| composition No | amount (part) of plasticizer per 100 parts of PVA | | | | evaluation of molded article | |
|---|---|---|---|---|---|---|
| | DPE | PE | total amount | blend ratio DPE/PE | oxygen permeation amount cc/m².day · atm | orientability |
| 11 | - | - | - | - | 0.45 | B |
| 12 | 5.18 | 0.08 | 5.3 | 61.5 | 0.44 | A |
| 13 | 5.6 | 5.6 | 11.1 | 1 | 0.18 | - |
| 14 | 10.9 | 0.2 | 11.1 | 61.5 | 0.39 | A |
| 15 | 17.4 | 0.3 | 17.6 | 61.5 | 0.39 | A |
| 16 | 12.5 | 12.5 | 25 | 1 | 0.29 | - |
| 17 | 0 | 25 | 25 | 0 | 0.38 | - |
| 18 | 24.6 | 0.4 | 25 | 61.5 | 0.33 | - |

Nos. 12 to 18, which were compositions containing dipentaerythritol and pentaerythritol had lower oxygen permeation than the side chain 1,2-diol PVA-based resin alone (No. 11). That is, gas-barrier property of them was improved. The effect of improving the gas-barrier property had a tendency to be increased in proportional to the increase of the total blending amount of dipentaerythritol and pentaerythritol. On the other hand, from a comparison of No. 13 and No. 14 and a comparison of No. 16 and No. 18, there is a tendency that the effect of improving the gas-barrier property is greater when the amount of DPE is nearly equal to that of PE in the composition, even if the total blending amount is almost the same.

The orientability of the compositions containing dipentaerythritol and pentaerythritol (Nos. 12, 14 and 15) was also superior to that of the side chain 1,2-diol PVA-based resin alone (No. 11).

### INDUSTRIAL APPLICABILITY

The resin composition of the present invention is applicable for melt-molding and provides a molded article with excellent gas-barrier property. Therefore, the resin composition is suitable for various packaging materials, particularly packaging films. In addition, a multilayer film containing a gas-barrier layer made of the resin composition may be suitably used in the field of food packaging and the like.

## Claims

1. A resin composition comprising a polyhydric alcohol having 5 to 15 carbon atoms, and a polyvinyl alcohol-based resin having a primary hydroxyl group in a side chain thereof.

2. The resin composition according to claim 1, wherein the polyhydric alcohol is at least one selected from the group consisting of dipentaerythritol and pentaerythritol.

3. The resin composition,
wherein the total content of the dipentaerythritol and the pentaerythritol is 0.1 parts by weight or more but less than 50 parts by weight per 100 parts by weight of the polyvinyl alcohol-based resin.

4. The resin composition according to any one of claims 1 to 3, wherein the polyvinyl alcohol-based resin is a polyvinyl alcohol-based resin having a structural unit represented by the following formula (3), wherein R¹ through R⁶ are a hydrogen atom or an alkyl group having 1 to 4 carbon atoms which may have an optional substituent, and X is a linking group.

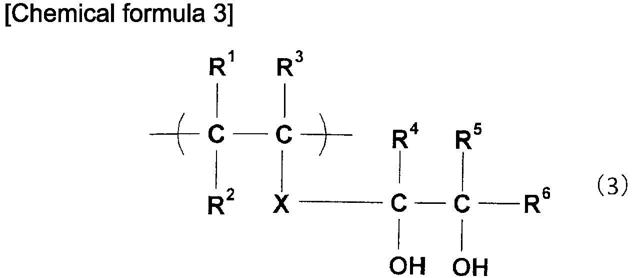

5. The resin composition according to any one of claims 1 to 4, which is in the form of pellets.

6. A melt molded article of the resin composition according to any one of claims 1 to 5.

7. A multilayer structure comprising a layer made of the resin composition according to any one of claims 1 to 5.
